# EUROPEAN PATENT APPLICATION

(11) **EP 1 744 294 A1**
(43) Date of publication of application: **17.01.2007**
(21) Application number: 05720515.5
(22) Date of filing: 10.03.2005
(51) Int. Cl.: G09B 29/00, G06F 17/30

(54) **MAP PLOTTING DEVICE, NAVIGATION DEVICE, MAP PLOTTING METHOD, MAP PLOTTING PROGRAM, AND INFORMATION RECORDING MEDIUM CONTAINING THE MAP PLOTTING PROGRAM**

(30) Priority: 16.03.2004 JP 2004074163
(71) Applicant: Pioneer Corporation, Tokyo 153-8654 (JP); Increment P Corporation, Tokyo 153-8665 (JP)
(72) Inventor: ADACHI, Keisuke, Tokyo 153-8665 (JP)
(74) Representative: Tappe, Hartmut
(86) International application number: PCT/JP2005/004244
(87) International publication number: WO 2005/088584

(57) **Abstract**

Enabling a partial update of data for displaying map to thereby improve efficiency of an updating operation.

The data for displaying map is constituted by a file group including a common map file CF and a plurality of regional map files RF-k. The regional map file RF-k is constituted by a map data portion RFM including map data corresponding to maps which are obtained by dividing a map of a predetermined reduction scale into predetermined areas and a regional map administration data portion RFR provided for managing the map data file. When the map is actually depicted on the basis of the map data, and map data corresponding to a map to be depicted are specified on the basis of data contained in the administration record CFC of the common map file CF and data contained in the regional map administration data portion RFR to thereby depict the map on the basis of the map data thus specified.

## Description

### TECHNICAL FIELD

The present invention particularly relates to a technology of depicting a map in a navigation apparatus which searches moving route and presents the moving route to a user.

### BACKGROUND ART

There have been provided by now various navigation apparatuses, namely those equipped in a movable body such as a vehicle and provided to guide the movable body. Such navigation apparatus has data for displaying a map, recorded in it, in order to display a map related to an area subjected to route guide. A map depicting a present position of the movable body and/or a route to a destination of the movable body is displayed on a display apparatus such as a liquid crystal display.

Further, in such type of the navigation apparatus, there is a navigation apparatus having a function that makes data for displaying the map record in a rewritable recording medium, such as a hard disk (hereinafter referred to as "HD"), and also makes data recorded in the navigation apparatus update to be the newest data by overwriting the map recorded in the rewritable recording medium.

### DISCLOSURE OF THE INVENTION

### Problems to be Solved by the Invention

According to the conventional navigation apparatus, data (hereinafter referred to as "map data") including configuration data such as polygon, polyline, and text and image data which produce in correspondence with maps in various reduction scales are described in one file. Maps showing entire areas to be displayed are depicted in use of the file. For example, when the navigation apparatus is to guide a movable body throughout the nation of Japan, the areas to be displayed extends over the nation of Japan. Therefore, the map data for depicting the maps through the nation of Japan and corresponding to various reduction scales are described in one file.

Accordingly, in updating the data for displaying map, it is necessary to update the entire file and impossible to partly update the file. Further, when the entire file is updated, a time required for the update is long, and an update operation becomes cumbersome.

The present invention is provided in consideration of the above explained situation, and has an object, as an example of the object, to provide a map depiction apparatus, a navigation device, a map depiction method, a map depiction program, and an information recording medium for recording map depiction program, which enable a partial update of data for displaying map and improvement of efficiency of the update operation.

### Means for Solving the Problems

In order to solve the above problem, a map depiction apparatus recited in Claim 1 is characterized in that, as one point of view of the present application, carries out a depiction process of producing map image data corresponding to a map to be displayed on a display unit and outputs the image data thus produced to the display apparatus including:
a first recording means for recording a map file, being a data file which is provided with respect to each of areas obtained by dividing an entire area, subjected to display on the map having at least :
   (a) map data used in producing the map image data of each of the areas and made up of structural data for depicting a map in the area; and
   (b) administration data indicative of whether or not the structural data corresponding to the region exists with respect to regions obtained by dividing each of the areas;
a second recording means which records an administration file having region specifying information for specifying each of the regions described in it, the region specifying information being in correspondence with specific data indicative of the map file where the corresponding region belongs;
a specifying means for specifying a map file which includes a region corresponding at least to the region specifying information when the region specifying information is acquired;
a judging means for judging whether or not the structural data exist in correspondence with the region specified by the region specifying information on the basis of the administration data, which are contained in the map file thus specified; and
   a display control means which produces, when it is judged that the structural data corresponding to the region exist, the map image data corresponding to the region on the basis of the structural data and outputs the map image data to the display means.

Further, according to the other point of view of the present application, a navigation apparatus recited in Claim 8 is characterized by having a map depiction apparatus which carries out a depiction process of producing map image data corresponding to a map to be displayed on a display unit including:
a first recording means for recording a map file, being a data file which is provided with respect to each of areas obtained by dividing an entire area, subjected to display on the map having at least :
   (a) map data used in producing the map image data of each of the areas and made up of structural data for depicting a map in the area; and
   (b) administration data indicative of whether or not the structural data corresponding to the region exists with respect to regions obtained by dividing each of the areas;
a second recording means which records an administration file having region specifying information for specifying each of the regions described in it, the region specifying information being in correspondence with specific data indicative of the map file where the corresponding region belongs;
a specifying means for specifying a map file which includes a region corresponding at least to the region specifying information when the region specifying information is acquired;
a judging means for judging whether or not the structural data exist in correspondence with the region specified by the region specifying information on the basis of the administration data, which are contained in the map file thus specified; and
a display control means which produces, when it is judged that the structural data corresponding to the region exist, the map image data corresponding to the region on the basis of the structural data and outputs the map image data to the display means.

Further, according to the other point of view of the present application, a map depiction method recited in Claim 9 is characterized by being carried out in a map depiction apparatus having,
(a) a map file, being a data file which is provided with respect to each of areas obtained by dividing an entire area, subjected to display on the map having at least :
   map data used in producing the map image data of each of the areas and made up of structural data for depicting a map in the area; and
   administration data indicative of whether or not the structural data corresponding to the region exists with respect to regions obtained by dividing each of the areas, and
(b) an administration file which has region specifying information for specifying each of the regions in a manner that the region specifying information is in correspondence with the specified data indicative of each of the map file where the corresponding region belongs, recorded in it, including:
   a first step of specifying a map file where a region corresponding to the region specifying information at least belongs on the basis of the administration file when the map depiction apparatus acquires the region specifying information;
   a second step carried out by the map depiction apparatus of judging whether or not the structural data corresponding to the region specified by the region specifying information exist on the basis of the administration data contained in the map file thus specified; and
   a third step by the map depiction apparatus of producing, when it is judged that the structural data exist, the map image data corresponding to the region on the basis of the structural data and outputting the map image data to a display means.

Further, according to the other point of view of the present application, a map depiction program recited in Claim 10 is characterized by reading out map data out of a recording medium and displaying a map on a display apparatus, the recording medium having a map file, being a data file which is provided with respect to each of areas obtained by dividing an entire area, subjected to display on the map having at least
map data used in producing the map image data of each of the areas and made up of structural data for depicting a map in the area; and
administration data indicative of whether or not the structural data corresponding to the region exists with respect to regions obtained by dividing each of the areas, and
(b) an administration file which has region specifying information for specifying each of the regions in a manner that the region specifying information is in correspondence with the specified data indicative of each of the map file where the corresponding region belongs, recorded in it, the map depiction program for causing a computer to perform:
   a specifying means for specifying a map file where a region corresponding at least to the region specifying information belongs on the basis of the administration map when the region specifying information is acquired;
   a judging means for judging whether or not the structural data exist in correspondence with the region specified by the region specifying information on the basis of the administration data, which are contained in the map file thus specified; and
   a display control means which produces, when it is judged that the structural data corresponding to the region exist, the map image data corresponding to the region on the basis of the structural data and outputs the map image data to the display means.

Further, according to the other point of view of the present application, an information recording medium recited in Claim 11 is characterized by having the map depiction program according to Claim 10 recorded onto it, so as to be read out by the computer.

### Brief Description of the Drawings

[Figure 1] A view for showing an example of data structure of data used in a map depiction apparatus for displaying map according to Embodiment 1.
[Figure 2] A schematic view for showing map data contained in a common map file CF and a regional map file RF-k according to the Embodiment.
[Figure 3] A view for showing an example of a data structure of regional map administration data unit RFR.
[Figure 4] A view for showing an example of a data structure of administration frame unit CFC.
[Figure 5] A block chart for showing an example of a concrete structure a navigation apparatus 100 which utilizes a map depiction apparatus according to the embodiment.
[Figure 6] A flow chart showing a processing content carried out by a system control unit 115 according to the Embodiment.
[Figure 7] A view for showing an example of a data structure of map displaying data utilized in a map depiction apparatus according to the second embodiment.

### EXPLANATION OF NUMERICAL REFERENCES

CF: Common Map File
RF-k(k=1,2, ···, n): Regional Map File
CFC: Administration Frame Unit
CFCH: Header Unit
CFBS: Block Set Administration Record Unit
CFCB: Common Map Block Administration Table
CFRB: Regional Map Block Administration Table
CFP,RFP: Parcel Administration Information Unit
RFRR: Record Unit
100: Navigation Apparatus

### BEST MODES FOR CARRYING OUT THE INVENTION

Hereinafter, the embodiments of the present invention will be described. Before specifically describing a apparatus structure, a data structure utilized in a map depiction apparatus carried out in the embodiments and a data structure utilized in the map depiction apparatus will be described.

### [1] Embodiment 1

### [1.1] Map depiction apparatus and data structure according to Embodiment 1.

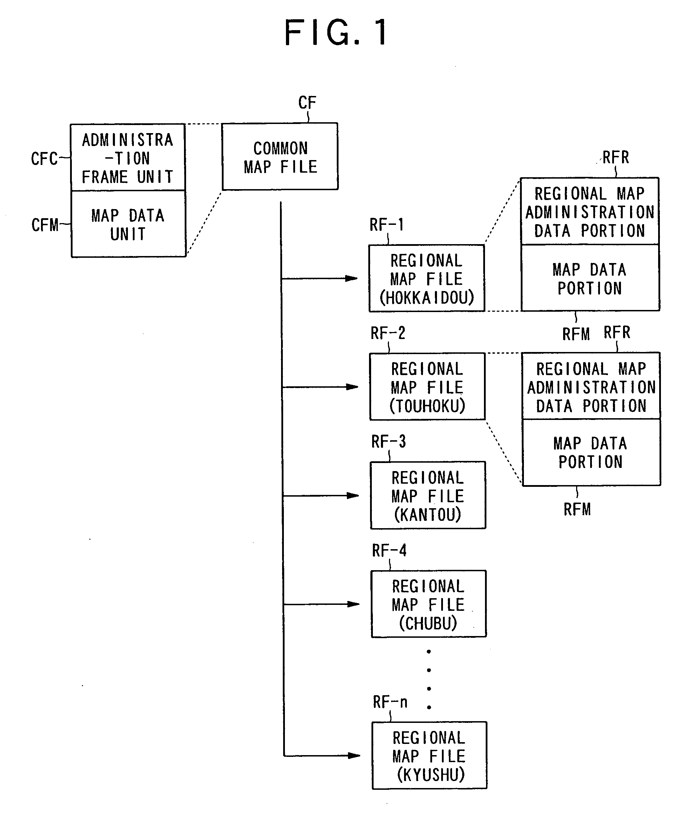

First, a data structure for map displaying data utilized in the map depiction apparatus according to the Embodiment 1 is shown in Figure 1. As shown, the map displaying data utilized in the map depiction apparatus according to the Embodiment 1 is configured as a file group made up of a common map file CF and a plurality of regional map file RF-k(k=1,2,···,n).

"Map File" recited in "Claims" of the present invention corresponds to, for example, the regional map files RF-k, and "Administration file" corresponds to, for example, the common map file CF.
In the Embodiment, the map data (data configured by the above structural data) are held under a state that the files CF and RF-k are respectively divided into map data units CFM and RFM. By updating a partial file inside the files CF and Rf-k, a part of the map displaying data is updated.

In the update, a number of files to be updated is arbitrarily determined. For example, when the update is carried out, only a partial regional map file RF-k may be updated, or a partial regional map file RF-k and the common map file CF may be simultaneously updated. Further, map data in the embodiment means data which is made up of configuration data such as polygon, polyline and text and utilized when a map is actually depicted. The map data means other than network data described below.

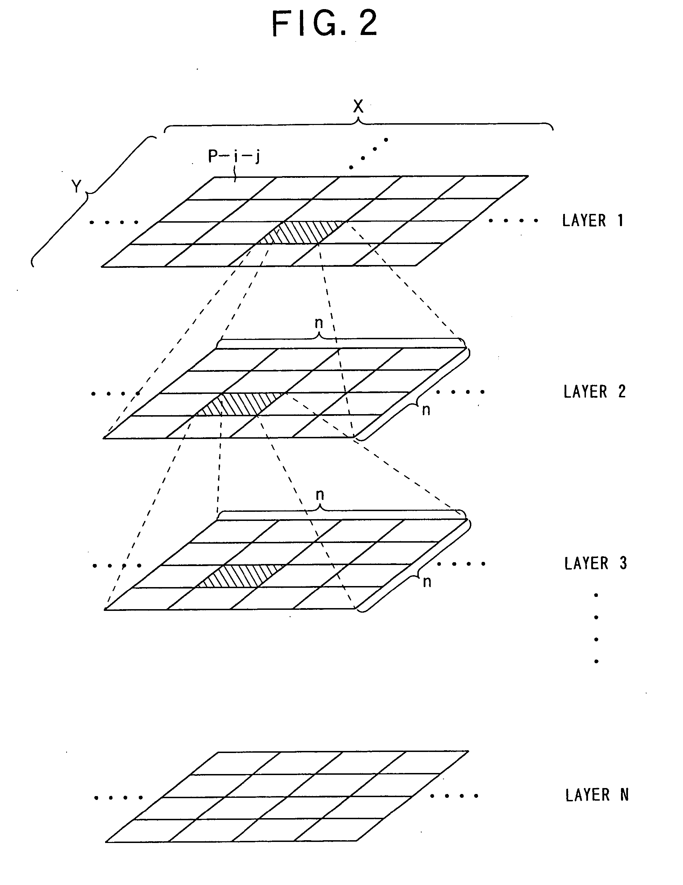

As such, the map data corresponding to displayable maps of all reduction scales are divided into the files CF and RF-k respectively and held. Therefore, the map data contained in the files CF and RF-k respectively have contents about regions and areas. A relationship of the map data respectively contained in the files CF and RF-k will be described in reference of Figure 2. Figure 2 schematically shows map data contained in the common map file CF and the regional map file RF-k according to the Embodiment

In this Embodiment, as shown in Figure 2, map data for depicting a plurality of hierarchized maps are included in the files CF and RF-k. The map data corresponding to the maps in each hierarchy are related to various reduction scales. At the same time, the map data are generated and managed as unit areas, which are referred to as basic parcels P-i-j(i=1,2,···,X, i=1,2,···,Y), obtained by dividing the map into rectangles or squares as many as X in east and west directions and as many as Y in north and south directions

The map data for depicting the basic parcels P-i-j are handled as unit data in the map depiction apparatus according to the Embodiment 1. When a map is actually depicted with the map depiction apparatus, the map is depicted with respect to each parcel P-i-j.

In this, "partial data" in "Claims" of the present application correspond to map data corresponding to the basic parcel P-i-j.

In each hierarchy, the maps have a unit referred to as a block which is constituted by the basic parcels P-i-j as many as the product of a pieces and b pieces and adjacent each other. Further, a unit referred to as a block set is constituted by the blocks as many as c pieces X d pieces. Furthermore, the map data as the basic parcels are aggregated in a unit of block or a unit of block set. The map data are managed with respect to each of the units.

Such the basic parcels P-i-j have the same size in actually depicting the map with the map depiction apparatus. The basic parcels P-i-j in each of the hierarchies are related each other in connection with, for example, degrees of latitude and longitude. More specifically, the basic parcels P-i-j belonging to two adjacent hierarchies have a relationship such that one of the basic parcel in the upper hierarchy corresponds to the basic parcels as many as the product of n and n in the lower hierarchy. For example, when n=4, basic parcels P-i-j as many as 16 in the lower hierarchy are included in a basic parcel P-i-j in the upper hierarchy of a map. In other words, the area corresponding to the basic parcel in the upper layer is depicted in the lower layer adjacent to the upper layer to show an area of 16 times larger than that in the upper layer.

The reduction scale of the maps corresponding to the hierarchies, the number of the hierarchies, and the specific number of n are arbitrary. However, in the embodiment, an explanation will be given on the premise that n=4, <Layer 1>: one over ten million and two hundred forty thousand (1/10,240,000), <Layer 2>: one over two million five hundred sixty thousand (1/2,560,000), <Layer 3>:one over six hundred forty thousand (1/640,000), <Layer 4>: one over one hundred sixty thousand (1/160,000), <Layer 5>: one over forty thousand (1/40,000), <Layer 6>: one over ten thousand (1/10,000), <Layer 7>: one over two thousand five hundred (1/2,500).

As such, when the reduction scales related to each of the maps are changed, the map data corresponding to a lower hierarchy have a wider display area and more data amount. Therefore, in this embodiment, the map data made up of the plurality of hierarchies are decoupled at a predetermined hierarchy. The map data corresponding to reduction scales larger than that of the predetermined hierarchy are allocated to a common map file CF, and map data corresponding to reduction scales a smaller than that of the predetermined hierarchy are allocated to a regional map file RF-k.

The map data allocated to the regional map file RF-k are respectively divided into areas obtained by decoupling a region which is displayable using the map data and allocated to the regional map file RF-k corresponding thereto. For example, when the displayable region is Japan in its entirety, the map data are divided into regions, as a unit of Hokkaidou and units including a plurality of other prefectures. The map data thus divided are allocated to the regional map files RF-k.

Accordingly, the map data contained in the regional map files RF-k are limited to data corresponding to a map of corresponding area. The number of the regional map files RF-k is determined by a method of dividing the displayable region.

Meanwhile, methods of specifically allocating the map data and dividing into the area are arbitrarily determined. For example, as for the above <Layer 7>, the reduction scale is small enough to require depiction of a detailed background. Therefore, the data amount increases. In order to deal with this, only the map data corresponding to the map of the layer 7 in the hierarchy is allocated to each of the regional map files RF-k. The map data corresponding to the other layers may be allocated to the common map file CF.

Further, among the adjacent layers, it is unnecessary to make the lower layer hold maps corresponding to all parcels, which are contained in the upper layer. For example, when a parcel for depicting only sea exists in basic parcels P-i-j contained in a lower layer and corresponding to a basic parcel P-i-j of the upper layer, it is unnecessary to prepare map data for such the parcel. Especially, as for layer 7, it is enough to prepare the map data only for a basic parcel P-i-j corresponding to an urban area where detailed depiction is required.

By utilizing the map data having the above structure, the maps having various reduction scales are displayed in the map depiction apparatus according to the Embodiment. More specifically, in the map depiction apparatus according to the embodiment, by pointing out a predetermined location of on the map, the map around the location is displayed on a designated reduction scale.

In this, when a structure such that the data for displaying the map are divided into a plurality of files and a part of the files in the file groups thus divided is updated as in the embodiment, there may be a case where a new file and an old file simultaneously exist to thereby disturb consistency of the data.

Especially, in case of employment of a structure that only the map in the above layer 7 is contained in the regional map RF-k, there would be more than a little occasion that map data of only urban areas are prepared for detailed depiction thereof. Therefore, map data which were not in an old file RF-k may often be added to a new file RF-k. In such the case, if it is tried to change the reduction scale of the map and display it, corresponding relationships among basic parcels P-i j, which belong to each of the layers, may be disordered. Therefore, there may be a situation such that a map corresponding to a parcel P-i-j, being other than the basic parcel P-i-j which should originally be displayed, is displayed.

Therefore, the map depiction apparatus according to the embodiment is configured such that the regional map files RF-k are managed on the premise that a map located in an upper layer and adjacent to maps which are allocated to the regional map file RF-k is covered by the regional map files RF-k. In other words, all the basic parcels P-i-j are treated as if there exist map data, corresponding to all the basic parcels P-i j, in the lowermost layers of the common map file CF.

For example, a case where only the map data, corresponding to the map in the layer 7, are contained in the regional map file RF-k will be described. In this case, there may be an occasion that maps and corresponding to all basic parcels P-i-j in the layer 6 are not provided in the layer 7. However, in such the occasion, the map data are managed as if there exist maps which belong to the layer 7 and corresponds to the basic parcel P-i-j in the layer 6.

Accordingly, a basic parcel being in the layer and without having map data is handled as if the map data exist. Therefore, when new map data are added to the regional map file when the regional map file is updated, it becomes possible to specify and manage the map data thus added.

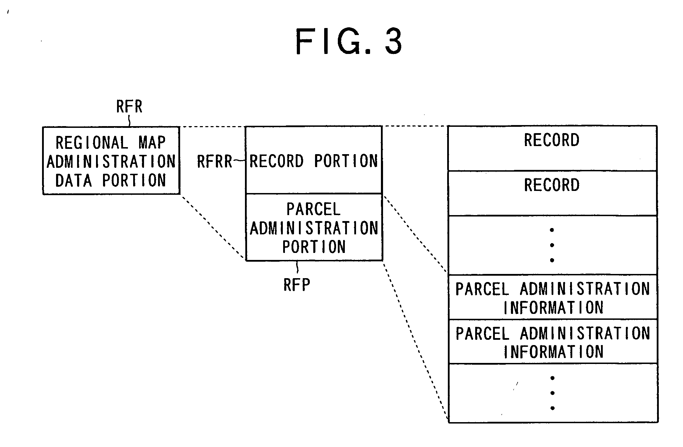

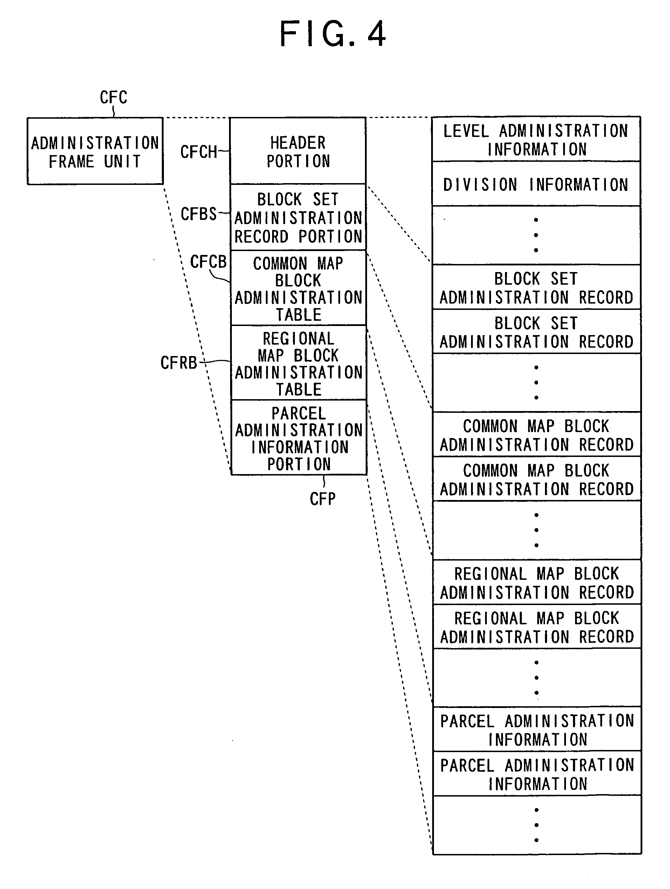

Hereinafter, in order to achieve such the function, an administration frame unit CFC which is provided in the common map file CF and a regional map administration data unit RFR which is provided in the regional map file RF-k will be described in reference of Figures 3 and 4. In this, Figure 3 shows an example of a data structure of the regional map administration data unit RFR. Figure 4 shows an example of a data structure of the administration frame unit CFC.

As shown, the regional map administration data unit RFR of the regional map file RF-k is made up of a record unit RFRR and a parcel administration information unit RFP.

The parcel administration information unit RFP contained in the regional map administration data unit RFR has, as its element, map data contained in the regional map file RF-k, i.e. parcel administration information for managing the map data corresponding to the map allocated to the regional map file RF-k. This parcel administration information contains data are data for managing the map data with respect to a unit of basic parcel P-i-j. The parcel administration information includes map data corresponding to each of the basic parcels P-i-j, namely information for managing unit data in the map data, for example, information such as a start address of map data corresponding to the basic parcel P-i-j and information such as data size of the map data. The parcel administration information is provided in relation to only the basic parcel P-i-j, which actually has the map data.

Meanwhile, the record unit RFRR contains, as its element, a record for managing the parcel administration information. This record is provided on the premise that map data corresponding to all basic parcels P-i-j exist regardless of whether the map data actually exist or not. This record includes at least any one of:
(i) when there are map data corresponding to a basic parcel P-i-j, the start address and data size of the parcel administration information corresponding to the basic parcel P-i-j, and
(ii) when there are not map data corresponding to a basic parcel P-i-j, data indicative of non-existence of map data corresponding to the parcel P-i-j.

As such, by previously making a record corresponding to the basic parcel P-i-j without having the map data, when new map data are added, the above information (i) is written into a record corresponding to the map data thereby enabling to specify the map data. Even when the map data do not exist, it is possible to specify a fact that the map data do not exist. Therefore, a processing error or the like does not occur.

Meanwhile, as shown in Figure 4, the administration frame unit CFC of the common map file CF is made up of a header portion CFCH, a block set administration record portion CFBS, a common map block administration table CFCB, a regional map block administration table CFRB, and a parcel administration information portion CFP.

The header portion CFCH contains, as header information of the common map file CF, data such as:
(a) level administration information indicative of a reduction scale of map which is depicted using all map data contained in the common map file CF and the regional map files RF-k, and
(b) division information indicative of reduction scales of map data which are allocated to the regional map files RF-k.

The parcel administration information portion CFCH has, as its element, parcel administration information for managing the map data which are contained in the common map file CF. The parcel administration information, which is contained in the parcel administration data portion CFP, contains information such as a start address of the corresponding map data and a data size of the map data.

As in the above described case where the entire area inside of the parcel P-i-j corresponds to the sea, there may be no map data corresponding a parcel P-i-j. As to the parcel administration information corresponding to the basic parcel P-i-j, it is possible to write data, indicative of non-existence of the map data, instead of information indicative of a location of storing the map data or the like.

Next, the common map block administration table CFCB has, as its element, a common map block administration record, which is provided to manage map data, which are contained in the common map file CF, in units of the above described blocks. In the embodiment, the common map block administration record contains, as information for managing the parcel administration information of the all basic parcels P-i-j which exist in the corresponding blocks, information such as a start address and a data size respectively of the parcel administration information corresponding to each of the parcels P-i-j.

Meanwhile, the regional map block administration table CFRB has, as its element, a regional map block administration record for managing the map data contained in the regional map file RF-k in units of the above described maps. This regional map block administration record is a field provided in correspondence with the above records, which are contained in the record portion RFRR of the regional administration data unit RFR. The regional map block administration record contains a file name of the regional map file RF-k containing each of the records, start addresses of the records, and data such as data sizes of the records

The regional map block administration record is provided on the premise that map data corresponding to all the basic parcels P-i₋j exist regardless of whether the map data actually exist or not, in a manner similar to the record contained in the record portion RFRR of the regional map file RF-k. The regional map block administration record contains data such as an address of the record corresponding to the basic parcel regardless of whether data any one of the above described (i) and (ii) are written into this record or not.

As a result, the regional map block administration record continues to constantly designate an identical record regardless of whether the regional map file RF-k is updated or not. An issue of whether or not the map data exist is exclusively defined by the record, contained in the regional map file RF-k. Therefore, even when a part of the regional map file RF-k is updated, it is possible to specify existence or non-exsistence of map data by a record inside a file RF-k.

The block set administration record portion CFBS contains a block set administration record for managing map data contained in both of the common map file CF and the regional map file RF-k in units of the above-described block set. Contained as its elements are start addresses and data sizes of the common map block administration record and the regional map block administration record, respectively corresponding to blocks belonging to each of the block sets.

In the map depiction apparatus according to the embodiment, when a map is actually depicted on the basis of map data with the map depiction apparatus according to the map data, in the first instance the map depiction apparatus specifies a reduction scale of a map to be depicted on the basis of the level administration portion, which is contained in the header portion CFCH. Then the block set containing a spot thus designated in the map thus specified with respect to the reduction scale is specified. The block administration record corresponding to the block containing the spot is specified on the basis of the block set administration record (common map block administration record or the regional map block administration record) corresponding to the block set.

At this moment, when the specified block administration record is the common map block record, namely it relates to map data contained in the common map file, the parcel administration information inside the common map file CF is extracted on the basis of data such as an address contained in the block administration record. Then the map data are extracted on the basis of the parcel administration information, and the image data corresponding to the map, which should be depicted, are subjected to image production on the basis of structural data contained in the map data.

On the other hand, when the block administration record thus specified is a regional map block administration record, the regional map file RF-k is read out on the basis of a file name contained in the block administration record and a record is extracted out of the file RF-k. When the record is completely extracted, in the map depiction apparatus according to the embodiment, it is judged whether or not the map data subject to be depicted exist, and when the map data to be depicted do not exist, the depiction is stopped, and when the map data exist, parcel administration information is read out on the basis of address or the like contained in the record. The map data are extracted out of the address specified by the parcel administration information, and image data corresponding to the map to be depicted are generated on the basis of structural data contained in the map data.

### [1.2] Specific Apparatus Structure

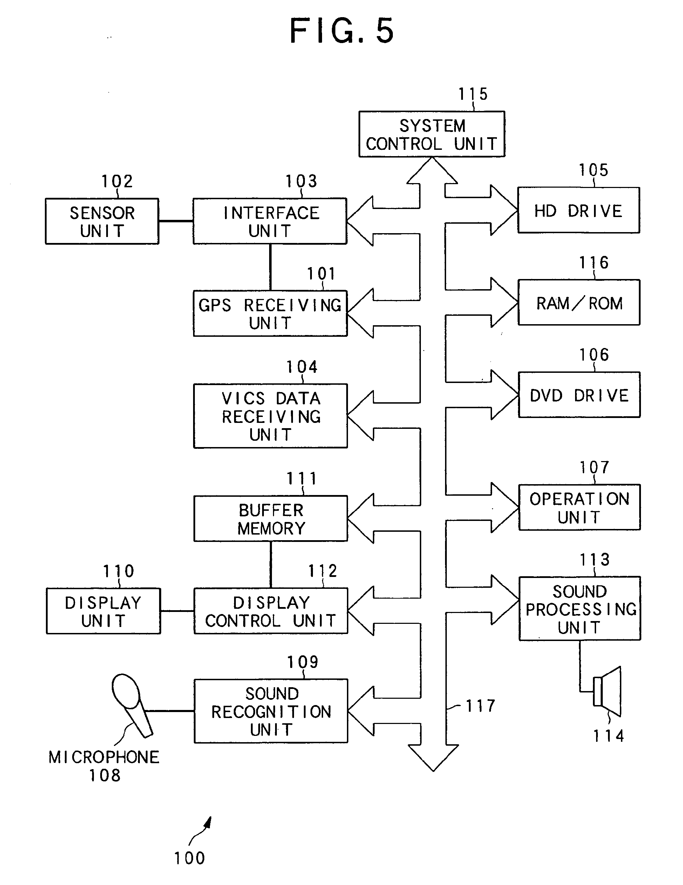

Next, in reference of Figure 5, a concrete structure of a navigation apparatus utilizing the above described map depiction apparatus 100 will be described. The navigation apparatus 100 depicts a map around a present position of vehicle in use of file groups for displaying map, and simultaneously display route guide information indicative of a route from the present position to the destination on the map.

In order to achieve such the function, the navigation apparatus 100 according to the present invention includes: a GPS(Global Positioning System) receiving unit, a sensor unit 102, interface unit 103(hereinafter "interface unit" is referred to as "I/F"), a VICS (Vehicle Information Communication System) data receiving unit 104, HD(Hard Disk)Drive 105, DVD drive 106, operation unit 107, microphone 108, sound recognition unit 109, display unit 110, buffer memory 111, display control unit 112, sound processor 113, speaker 114, system Control unit 115, ROM (Read Only Memory) / RAM(Random Access Memory) unit 116, and data bus 117 for mutually connecting these elements.

Further, "first recording device" and "second recording device" in [Claims] correspond to, for example, an HD drive 105. "Specifying device" and "judging means" correspond to, for example, a system controlling unit 115. Further, "display control device" in [Claims] corresponds to, for example, a display control unit 112 and a system control unit 115.

The GPS receiving unit 113 receives GPS radio wave emitted from a geodetic earth orbiting satellite, calculates degrees of latitude and longitude corresponding to a present position of a vehicle on the basis of the GPS electric wave thus received, and outputs the degrees of latitude and longitude thus calculated, as GPS data, to the I/F unit 103. The sensor unit 102 is equipped with various sensors for detecting a running speed, an accelerated velocity, and an azimuthal angle. The traveling data corresponding to the result of the detection is outputted to the I/F unit 103.

The I/F unit 103 calculates a present position of the vehicle on the basis of the GPS data which is inputted from the GPS receiving unit 101, and outputs the own vehicle position data corresponding to the result of the calculation to the system control unit 115. The VICS data receiving unit 104 receives a broadcast electric wave such as FM multiplex broadcast, extracts the VICS data contained in the broadcast electric wave, and outputs it to the system control unit 115. The VICS is the road Vehicle Information and Communication System, and the VICS data designate road vehicle information such as traffic snarl-up, traffic accident, and traffic regulation.

The HD drive 105 is constituted by a rewritable HD. This HD has (data a) which are file groups (common map file CF and regional map file RF-k) for displaying map described above, (data b) which are data for searching a spot and other data necessary for traveling guide. The HD drive 105 reads out various data out of HD and supplies these to the system control unit 115.

The DVD drive 106 has an accommodation part for detachably accommodating a DVD, and a drive for reproducing a disk loaded in the accommodation unit. Data read out of the DVD, loaded into the accommodation part, are outputted to a data bus 116 by the DVD drive 106.

The operation unit 107 is constituted by a remote control apparatus having various keys such as ten keys and a cursor key. The operation unit 107 outputs a control signal corresponding to the input operation from a user (driver or passenger) to the system control unit 115. The sound recognition circuit 109 receives sound, vocalized by a user and inputted into a microphone 108. The sound recognition circuit 109 analyzes the sound thus inputted, recognizes operation commands from the user, and outputs a control signal corresponding to the operation command to the system control unit 115.

Map data read out of the HD drive 105 are inputted into the display control unit 112. On the basis of the map data thus inputted, the display control unit 112 depicts image data corresponding to the map on the buffer memory 111. Thus depicted image data are read out of the buffer 111 at a predetermined timing out of the buffer 111 and outputted to the display unit 110. The display unit 110 may be constituted by any display apparatus such as a cathode ray tube (CRT), an electro luminescent (EL) panel, and a liquid crystal display panel.

The voice recognition unit 113 generates a sound signal under a control of the system control unit 115, and propagates the sound signal thus generated through the speaker 114. According to function of the sound processing unit 113, the navigation apparatus 100 according to the present invention notifies, for example, a traveling direction of a vehicle at a next intersection or conditions of traffic snarl-up and traffic closure along a setup route to the user.

The system control unit 115 is mainly constituted by a central processing unit (CPU). The system control unit 115 further includes a GPS reception port, a key input port, and a display unit control port to thereby totally control functions of the navigation apparatus 100 in its entirety. In this control, the system control unit 115 reads out a control program, which is recorded in the ROM/RAM unit 116, to conduct various processes, and temporarily holds data to be processed in the ROM/RAM unit 116.

For example, when a route is guided, the system control unit 115 outputs a control signal to the HD drive 105 to make the HD drive read out a common map file CF corresponding to a present position. The system control unit 115 specifies parcel control information corresponding to a basic parcel P-i-j containing the present position of vehicle on the basis of a control frame CFC which is contained in the common map file CF, and reads out map data corresponding to the parcel control information. The system control unit 115 outputs the map data thus read out to the display control unit 112, and controls the display control unit 112 so that a map corresponding to the map data is displayed on the display unit 110.

Further, the system control unit 115 makes the HD drive 105 read out a common map file CF in response to the input operation when a request of changing a reduction scale of map is inputted through the operation unit 107. Then map data corresponding to the reduction scale designated by a user are specified on the basis of the common map file CF. Then the system control unit 115 makes the HD drive 105 read out the map data thus specified and outputted to the display control unit 112 upon an output of a control signal to the HD drive 105.

A method of concretely specifying the map data is as described above. A route setup after setting up a destination may be similar to a process in a currently available navigation apparatus. Then a detailed description of route setup is omitted.

### [1.3] Concrete operation of navigation apparatus

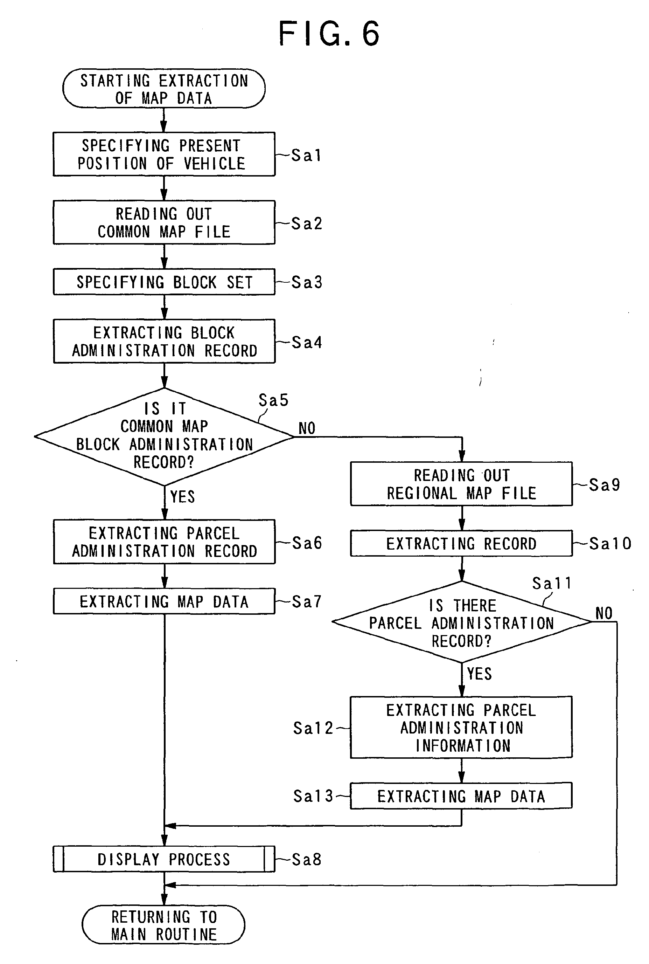

Next, in reference of Figure 6, an explanation will be given of processes in the navigation apparatus of specifying map data corresponding to a basic parcel P-i-j necessary for depicting in the navigation apparatus 100 according to the present embodiment and being carried out when a map is depicted on the basis of the map data.

The processes shown in the Figure 6 is what carried out by the system control unit 115 as a sub routine of the control program when the following events occur.
(Event A) A case where an electric power is thrown into the navigation apparatus 100
(Event B) An input operation by a user of requesting to guide a route through the operation unit 107
(Event C) An input operation by a user of requesting to change a reduction scale through the operation unit 107

In this process, the system control unit 115 first specifies a present position of a vehicle having a navigation apparatus equipped in it (Step Sa1). At this time, the system control unit 115 calculates degrees of longitude and latitude corresponding to the present position of the vehicle and also calculates a traveling direction and a traveling speed of the vehicle, on the basis of own vehicle positional data which are outputted from the I/F unit 103.

Next, the system control unit 115 outputs a control signal to the HD drive 105 and makes the HD drive read a common map file CF (Step Sa2), and specifies a block set where a basic parcel P-i-j corresponding to the present position of the vehicle (Step Sa3). To be specific, the system controlling unit 115 specifies a reduction scale of the map to be displayed on the basis of level control information of the header unit CFCH and a block set control record corresponding to the block set, which contains the basic parcel to be displayed. A concrete process in this occasion is similar to processes in navigation apparatuses available by now. Then a detailed description of the concrete processes is omitted.

Furthermore, the system control unit 115 extracts a block administration record on the basis of the address and data size stored in the block set record (Step Sa4). Then it is judged whether or not the block administration record thus extracted is a common map block administration record (Step Sa5). At this moment, it is possible to arbitrarily determine a method of judging whether or not the block administration record thus extracted is the common map block. The method is, for example, judgment of whether or not a file name is described in a record thus extracted.

In such the judgment, when it is judged "yes", namely the block administration record is the common map block administration record, the system control unit 115 extracts parcel administration information corresponding to the basic parcel P-i-j which should be displayed on the basis of data, e.g. address, contained in the common map block administration record (Step Sa6). The system control unit 115 extracts the map data on the basis of the parcel administration information thus extracted (Step Sa7) and carries out a display process(Step Sa8). Thereafter, the process returns to a main routine.

In this display process (Step Sa8), the system control unit 115 carries out processes as follows in response to the above-described events A, B, and C.
(Event A) The display control unit 112 is controlled so that the map data are outputted to the display control unit 112, and a present position of the vehicle is displayed on the map corresponding to the map data.
(Event B) After setting up a route from a present position of the vehicle to a destination, the display control unit 112 is controlled so that the map data thus extracted are outputted to the display control unit 112 and the route guide information corresponding to the setup route is displayed
(Event C) In a manner similar to the above event A, the display control unit 112 is controlled so that the map data are outputted to the display control unit 112 and simultaneously the present position of the vehicle is displayed on a map corresponding to the map data.

On the contrary thereto, when it is judged to be "no" in Step Sa5, namely when a block administration record extracted in Step Sa4 is the regional map block administration record, the system control unit 115 outputs a control signal to the HD drive 105 and makes the regional map file RF-k corresponding to the basic parcel to be displayed read (Step Sa9). At this time, the system control unit 115 specifies the regional map file which should be read on the basis of the file name contained in the regional map block administration record.

As such, when the regional map file RF-k is read out, the system control unit 115 extracts the record corresponding to the regional map block administration record which was extracted in Step Sa4 out of the record unit RFRR of the regional map file RF-k thus read out(Step Sa10). The system control unit 115 judges whether or not the parcel administration record corresponding to the record exists on the basis of record thus extracted (Step Sa11). In this occasion, the system control unit 115 judges whether or not parcel administration information exists in accordance with whether the content contained in the record is (i) or (ii), described above.

In this judgment, when it is judged "no", the system control unit 115 returns to the main routine without extracting the map data. When it is judged "no" in Step Sa11, it is arbitrary determined whether or not the map data corresponding to a map having a different reduction scale is extracted again. When the map data corresponding to the map having the different reduction scale are extracted, it is sufficient to conduct a process similar to that shown in Figure 6.

On the other hand, when if it is judged "yes" in Step Sa11, the system control unit 115 extracts the parcel administration information on the basis of data such as address contained in the record thus extracted (Step Sa12). The system control unit 115 extracts the map data on the basis of the data such as the address (Step Sa13). Thereafter, the system control unit 115 conducts a display process in Step Sa8 and returns to the main routine.

Hereinafter, when a similar event occurs, the sub routine shown in Figure 6 is conducted, and new map data are extracted. In this, not only when the above event occurs but also when it is necessary to depict the map as in a case of setting up a destination, a similar process is carried out.

Further, there may be a case where map display is scrolled along with movement of vehicle. In this case, a basic parcel P-i-j to be displayed is changed. It is arbitrary to employ whatever method for scrolling map display. For example, it may be possible to carry out a sub routine shown in Figure 6 at every display scrolling and extract map data corresponding to basic parcels P-i-j after each scrolling.

Further, when information for specifying a basic parcel P-i-j adjacent to a certain basic parcel P-i-j may be described into parcel administration information corresponding to the certain basic parcel P-i-j. For example, an address or the like of the parcel administration information corresponding to the adjacent basic parcel may be described into the parcel administration information corresponding to the certain basic parcel P-i-j so that this information is referred to in extracting the map data when scrolling up display is performed. Furthermore, when the map data are extracted, map data of the adjacent basic parcel P-i-j, which is adjacent to the certain basic parcel P-i-j, may be previously read out to thereby display in use of the map data by scrolling up display.

As such, the map depiction apparatus according to the present embodiment performs a depiction process of generating an image data corresponding to the map to be displayed in the display unit 110, such as a liquid crystal display, and outputs the image data thus produced to the display apparatus. In this, the entire area to be displayed in the map is divided into a plurality of areas like Hokkaidou and Touhoku, and regional map files RF-k are provided with respect to each of the areas. The regional map files RF-k containe at least (a) map data made up of configuration data such as polygon which is used in producing image data corresponding to the maps in each area and (b) administration data indicative of existence or non-existence of the map data, which are made up of the configuration data belonging to the basic parcel P-i-j, with respect to each of a plurality of the basic parcels, which are obtained by dividing each of the areas. Further, in the map depiction apparatus, in order to specify the basic parcel P-i-j and the regional map file RF-k corresponding to the basic parcel P-i-j, the administration frame unit CFC containing the block administration records and the block set administration records are provided. When the block administration record is specified on the basis of the block set administration record, the system administration unit 115 specifies the regional map file RF-k containing the basic parcel P-i-j subjected to depiction by the system administration unit 115. The system control unit 115 judges whether or not the map data (configuration data) for depicting the basic parcel P-i-j corresponding to the block administration record exist on the basis of the record of the regional map file RF-k thus specified. Further, when it is judged that map data corresponding to the basic parcel P-i-j exist, the display control unit 112 produces the image data for displaying the map on the basis of the map data, and outputs the image data to the display unit 110.

According to this structure, since it is specified whether or not the map data corresponding to the basic parcel P-i-j which should be depicted on the basis of the record, even when a part of the files such as various files CF and RF-k is updated, it is possible to specify whether or not the newly added data exist by the record.

Accordingly, it becomes possible to update data for displaying the map and actually and surely display a desirable map. Thus an efficiency of updating operation can be improved.

Further, in the map depiction apparatus according to the embodiment, the map data are generated and managed with respect to each of the basic parcels. The display control unit 112 produces image data for displaying a map of the basic parcel P-i-j on the basis of structural data, which are contained in map data corresponding to the basic parcel P-i-j, subjected to depiction. Therefore, it is possible to simplify a production management of the map data.

Furthermore, in the map depiction apparatus according to the embodiment, the administration frame unit CFC is constituted to include data such as the level administration information and the block administration record for specifying at least the basic parcel P-i-j on the basis of a point on the map. Therefore, by pointing out a point on the map, it becomes possible to display a map corresponding to the basic parcel including the point.

Furthermore, according to the map depiction apparatus according to the embodiment, the common map file CF contains map data in correspondence with a map having a larger reduction scale than that of the map data contained in the regional map file RF-k. The system control unit 115 is constituted to produce image data for displaying the map on the basis of the map data contained in the common map file CF when the image data for displaying the map in correspondence with the map having a larger scale than that of the map data contained in the regional map file RF-k.

Therefore, as to the maps having the large reduction scale, it becomes unnecessary to read out the regional map file RF-k to thereby simplify the process.

Furthermore, map data corresponding to maps of at least two reduction scales or more and parcel administration information for managing the map data corresponding to the basic parcels P-i-j in each of the reduction scales are contained in the map depiction apparatus according to the embodiment. Meanwhile, in the common map file, the level administration information and the block administration information are described, the basic parcel P-i-j including the designated point and the reduction scale thereof are specified by the system control unit 115, and the regional map file RF-k having the basic parcel P-i-j is specified.

Therefore, it is possible to increase the data amount of the map data which are allocated to the regional map file RF-k, reduce the data amount which should be updated at a time of updating file, and reduce a labor necessary for the update operation.

In this embodiment, the structure that the file groups for displaying map are recorded onto the HD drive 105 is employed. These files should not always be recorded inside the navigation apparatus 100. For example, a part of the files contained in the files for displaying the maps may be held in a server of a network. The file may be downloaded when necessary, and a point may be searched in use of the file thus downloaded. Further, for example, the all file groups for displaying the maps may be held in a server of a network. Map data may be extracted in the server and only the map data thus extracted may be transmitted to the navigation apparatus 100.

Further, in the embodiment, although there has been described about a case where the map depiction apparatus according to the embodiment is utilized in a navigation apparatus 100 for vehicle, it is unnecessary to say that such the map depiction apparatus is applicable to the other apparatuses. For example, by applying the map depiction apparatus to a portable handy phone, the invention is also applicable such that a walker on the move can confirm a map around a present position of himself or herself, and a walker can be guided along a route.

Furthermore, in the above embodiment, the structure is employed to partly update the file for displaying map such that the DVD drive 106 is provided in the navigation apparatus 100, and the DVD having the files CF and RF-k, both subjected to be updated, recorded in it, is reproduced with use of the DVD drive 106. However, the files CF and RF-k for update may be downloaded from a server on a network, and an apparatus dedicated for updating the files CF and RF-k, which are recorded in the HD drive 105 may be separately prepared. Furthermore, in the structure of updating the above point searching file RF-k is updated, it may be possible to update data inside HD by the dedicated apparatus, and the data may be updated in a condition that the navigation apparatus is connected to the HD drive 100.

Further, in the above embodiment, a structure such that the map data are divided in units of the basic parcels, and these map data are subjected to management in units of blocks and further so-called block sets by summing up these. However, the map data are managed in units of the parcels, and it is not always necessary to manage in units of the blocks and the block sets.

Furthermore, in the embodiment, the map data corresponding to maps of a plurality of layers are allocated to the common map file CF and the regional map file RF-k. However, it may be possible to provide only the administration frame CFC in the common map file, and all the map data are allocated to each of the regional map files RF-k.

Further, in the embodiment, it is constituted such that the map data corresponding to each of the basic parcels P-i-j are managed in use of the block administration record by providing the block administration record related to all the map data in the administration record unit CFC of the common map file CF, namely the common map block administration record and the regional map block administration record. However, the regional map block administration record may be provided in the regional map file RF-k. In this case, the regional map file RF-k is required to have the record unit RFRR which has a record corresponding to each of the regional map block administration records as its element.

Further, in the embodiment, it is constituted such that the file groups for displaying map are recorded in the map depiction apparatus of, for example, the navigation apparatus, and the map data corresponding to a position of displaying a map are extracted. However, it may be possible to conduct a processing operation similar to the above by providing a recording medium having a program for stipulating the processing operation and a computer for reading out the program and reading in the program with the computer.

### [2] Embodiment 2

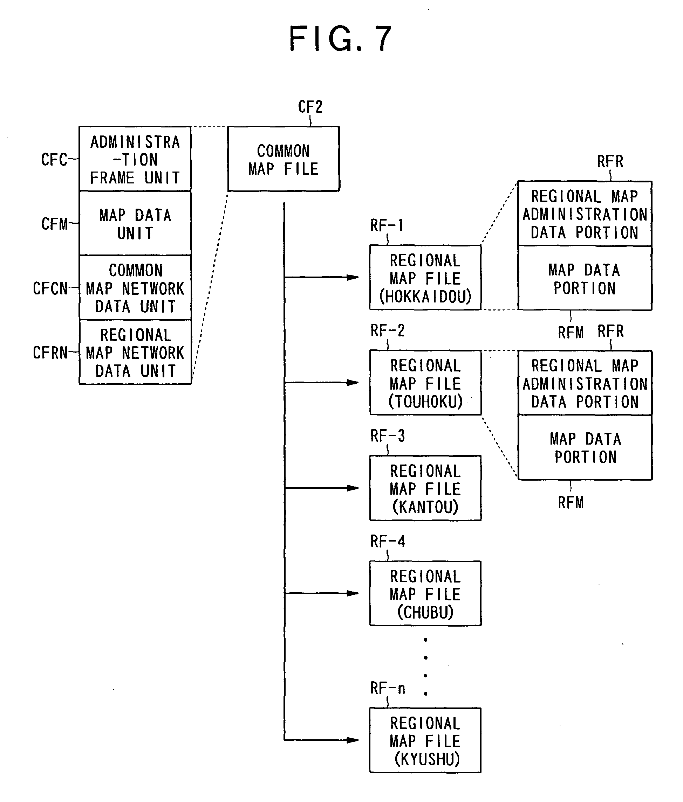

The navigation apparatus 100 according to the Embodiment 1 holds the file groups made up of, for example, the common map file CF as the data for displaying map and conducts processes of such as map display and a route guide in use of the file groups. On the contrary thereto, in the Embodiment 2, file groups for displaying map, shown in Figure 7, are held in a navigation apparatus 100 having a structure similar to that in Figure 5 to thereby carry out processes such as a map display and a route guide while utilizing these file groups. In Figure 7, similar references are attached to elements similar to those shown in Figure 1.

As shown in the Figure 7, there are employed a structure that a control frame piece CFC, a map data piece CFM, and a common map file CF2 containing a common map network data piece CFCN and a regional map network data piece CFRN.

The common map network data unit CFCN has common map network data for managing each of the roads in maps which are depicted in various reduction scales on the basis of the map data contained in the common map file CF2, as its element. The network data include, for example, (a)a road linkage and a node for showing a location where the roads exist on the maps corresponding to the various scales, (b) data utilized in matching maps, (c) data used for setting up the route, and (d) data such as traffic conditions of the roads.

The road linkage means a plurality of straight lines used to approximate various roads. The road linkage is used for specifying existing positions of the roads in the maps when a route setup process and a map matching process are carried out. Further, the node means an end point on both sides of the road linkages. By connecting the road linkages at the nodes, the various existing positions on the maps of the roads are approximated. The detail description is omitted since the road linkage and the node may be similar to those available.

On the contrary thereto, the regional map network data unit CFRN has the regional map network data for managing various roads on the maps, which are depicted on the base of the map data contained in the regional map file RF-k, as its elements. Concrete contents of the regional map network data are similar to a case of the common network data.

This regional map network data should inherently be held in each of the regional map files RF-k. In this Embodiment 2, it is constituted the management of the regional map network data are unified in the common map file CF2. This is because when if a structure that the regional map network data are held in each of the regional map files RF-k is employed, there may be a possibility of losing consistency of the regional map network data among the regional map files RF-k as a result of a partial update of the data for displaying map.

For example, when a new regional map file RF-k and an old regional map file RF-k coexist, there may be a situation where a road that did not exist in the old regional map file is added to the new regional map file RF-k. If such the situation occurs, there may occur an event that regional map network data corresponding to the road contained in each of the regional map files RF-k do not exist in other regional map files RF-k.

Accordingly, when the data for displaying map are partly updated, it becomes necessary to ensure a consistency of the regional map network data. Accordingly, in this embodiment 2, a structure of making all the regional map network data hold in the common map file CF2 is employed.

When such the structure is employed, when if the common map file CF2 is updated at a time of updating data, there may be a possibility that a road displayed on the basis of a regional map network data contained in the common map file CF2 is not in conformity with a road displayed on the basis of a regional map network data which are not yet updated. Specifically, a regional map network data corresponding to a road, not in a map, displayed on the basis of map data in the regional map file RF-k which is not updated, are contained in the common map file CF2. However, in such the case, it becomes possible for a user to enjoy, without sense of discomfort, a route guide with the navigation apparatus 100 by depicting route guide information in a shape of road or as if the route guide information is displayed on the road when the route guide is actually performed.

When a route of a vehicle is guided with the navigation apparatus 100 having the above structure according to this Embodiment 2, the system control unit 115 performs the following process in the above described Step Sa8 of Figure 6.

First, the system control unit 115 specifies a reduction scale of a map to be displayed on the basis of level administration information contained in a header portion of the common map file CF2, and extracts network data corresponding to the reduction scale. At this time, the system control unit 115 extracts the regional map network data when the map to be displayed corresponds to map data contained in the regional map, and extracts the common map network data when the map to be displayed corresponds to map data contained in the common map file CF2. As such, after completing the extraction of the network data, the system control unit 115 carries out a map matching process on the basis of the network data. After completing the map matching process, the system control unit 115 set up a route from a present position of a vehicle to a destination. Thereafter, the system control unit 115 outputs the map thus extracted and carries out a control of the display control unit 112 so that route guide information corresponding to the route thus setup and information indicative of the present position of the vehicle on a map corresponding to the map data.

Meanwhile, since an operation in carrying out the map matching process on the basis of the network data and an operation in setting up the route guide are similar to those in currently available navigation apparatus 100, the detailed description of these operations is omitted.

As such, in the navigation apparatus 100 according to this embodiment 2, in a case where network data indicative of existing positions of various roads on the map are further contained in the common map file CF2, the system control unit 115 specifies the present position of the movable body on the map, generates image data on the basis of structural data so that information indicative of the existence of the movable body at a position on the map thus specified, and outputs the image data to a display unit 110.

According to the structure, the present position of the vehicle on the map is specified on the basis of the network data, and the present position is displayed on the map. Accordingly , even though the data for displaying map are partly updated, it becomes possible to accurately specify the preset position of the vehicle on the map, and display it on the map.

Further, in the navigation apparatus according to this Embodiment 2, it is constituted that the system control unit 115 sets up a route from a position of a movable body on the map to a destination which is set up on the basis of network data contained in the common network file CF2. Therefore, even when the data for displaying data are partly updated, it is possible to accurately set up the route.

Meanwhile, in this embodiment 2, although there is employed the structure of making the common map file hold the common map network data file and the regional map network data file corresponding to the common map file CF2 and the regional map file RF-k, these data may be managed in separate files.

Further, in this Embodiment 2, it is constituted to make the network data corresponding to the map data of all reduction scales hold in the common map file CF2. However, as to a map having a small reduction scale such as a map corresponding to the above layer 7, it is not always necessary to provide the network data in it. Accordingly, in a case of employing a structure of allocating only the map of the above layer 7, it is not always necessary to make the common map file CF2 hold the regional map network data, and it is sufficient to make it hold only the common map network data.

## Claims

1. A map depiction apparatus which carries out a depiction process of producing map image data corresponding to a map to be displayed on a display unit comprising:
a first recording means for recording a map file, being a data file which is provided with respect to each of areas obtained by dividing an entire area, subjected to display on the map having at least :
(a) map data used in producing the map image data of each of the areas and made up of structural data for depicting a map in the area; and
(b) administration data indicative of whether or not the structural data corresponding to the region exists with respect to regions obtained by dividing each of the areas;
a second recording means which records an administration file having region specifying information for specifying each of the regions described in it, the region specifying information being in correspondence with specific data indicative of the map file where the corresponding region belongs;
a specifying means for specifying a map file which includes a region corresponding at least to the region specifying information when the region specifying information is acquired;
a judging means for judging whether or not the structural data exist in correspondence with the region specified by the region specifying information on the basis of the administration data, which are contained in the map file thus specified; and
a display control means which produces, when it is judged that the structural data corresponding to the region exist, the map image data corresponding to the region on the basis of the structural data and outputs the map image data to the display means.

2. The map depiction apparatus according to Claim 1, wherein
the map data are made up of partial data including structural data for region by region depicting a map corresponding to the region, and
the display control means produces the map image data for displaying the map of the region on the basis of the structural data contained in the partial data corresponding to the region when it is judged by the judging means such that the structural data corresponding to the region exist.

3. The map depiction apparatus according to Claim 1, wherein
the region specifying information includes at least information for specifying a point on the map,
the administration file has both of specifying data for specifying the region where the point corresponding to the region specifying information belongs and specifying data for specifying the map file where the point belongs, on the basis of the region specifying information,
the specifying means specifies the map file where the region belongs and the region corresponding to the region specifying information on the basis of the administration file when the region specifying information is inputted.

4. The map depiction apparatus according to Claim 1, wherein
the administration file includes map data corresponding to a map of a reduction scale larger than the map data contained in the map file, and the display control means produces the map image data on the basis of the map data contained in the administration file when map image data for displaying a map corresponding to a reduction scale larger than that of the map data included in the map file.

5. The map depiction apparatus according to Claim 1, wherein
the map file includes map data corresponding to maps of two reduction scales or more and the administration data corresponding to the regions of each of the reduction scales,
the administration file has the region specifying information and the specifying data, with respect to each of the reduction scales, such that the region specifying information and the specifying data correspond each other,
the specifying means specifies, when the region specifying information is inputted, on the basis of the administration file, the reduction scale and the map file where the region corresponding to the region specifying information belongs, and
the judging means judges whether or not the structural data corresponding to the region on the map of thus specified reduction scale on the basis of the administration data of the map file thus specified.

6. The map depiction apparatus according to Claim 1, further comprising:
a network data recording means which records network data for designating an existing position of roads which are displayed on the map; and
a position specifying means for specifying a present position of a movable body on the map on the basis of the network data, wherein
the display control means produces the map image data on the basis of the structural data and outputs the map image data to the display means so that movable body positional information indicative of existence of the movable body at the position, which is specified by the position specifying means on the map, is displayed along with the map of the region.

7. The map depiction apparatus according to Claim 6, further comprising:
a route setup means for setting up a route from the position of the movable body specified by the position specifying mean on the map to a destination to be set up, on the basis of the network data.

8. A navigation apparatus having a map depiction apparatus which carries out a depiction process of producing map image data corresponding to a map to be displayed on a display unit comprising:
a first recording means for recording a map file, being a data file which is provided with respect to each of areas obtained by dividing an entire area, subjected to display on the map having at least :
(a) map data used in producing the map image data of each of the areas and made up of structural data for depicting a map in the area; and
(b) administration data indicative of whether or not the structural data corresponding to the region exists with respect to regions obtained by dividing each of the areas;
a second recording means which records an administration file having region specifying information for specifying each of the regions described in it, the region specifying information being in correspondence with specific data indicative of the map file where the corresponding region belongs;
a specifying means for specifying a map file which includes a region corresponding at least to the region specifying information when the region specifying information is acquired;
a judging means for judging whether or not the structural data exist in correspondence with the region specified by the region specifying information on the basis of the administration data, which are contained in the map file thus specified; and
a display control means which produces, when it is judged that the structural data corresponding to the region exist, the map image data corresponding to the region on the basis of the structural data and outputs the map image data to the display means.

9. A map depiction method carried out in a map depiction apparatus having,
(a) a map file, being a data file which is provided with respect to each of areas obtained by dividing an entire area, subjected to display on the map having at least:
map data used in producing the map image data of each of the areas and made up of structural data for depicting a map in the area; and
administration data indicative of whether or not the structural data corresponding to the region exists with respect to regions obtained by dividing each of the areas, and
(b) an administration file which has region specifying information for specifying each of the regions in a manner that the region specifying information is in correspondence with the specified data indicative of each of the map file where the corresponding region belongs, recorded in it, comprising:
a first step of specifying a map file where a region corresponding to the region specifying information at least belongs on the basis of the administration file when the map depiction apparatus acquires the region specifying information;
a second step carried out by the map depiction apparatus of judging whether or not the structural data corresponding to the region specified by the region specifying information exist on the basis of the administration data contained in the map file thus specified; and
a third step by the map depiction apparatus of producing, when it is judged that the structural data exist, the map image data corresponding to the region on the basis of the structural data and outputting the map image data to a display means.

10. A map depiction program for reading out map data out of a recording medium and displaying a map on a display apparatus, the recording medium having a map file, being a data file which is provided with respect to each of areas obtained by dividing an entire area, subjected to display on the map having at least
map data used in producing the map image data of each of the areas and made up of structural data for depicting a map in the area; and
administration data indicative of whether or not the structural data corresponding to the region exists with respect to regions obtained by dividing each of the areas, and
(b) an administration file which has region specifying information for specifying each of the regions in a manner that the region specifying information is in correspondence with the specified data indicative of each of the map file where the corresponding region belongs, recorded in it, the map depiction program for causing a computer to perform:
a specifying means for specifying a map file where a region corresponding at least to the region specifying information belongs on the basis of the administration map when the region specifying information is acquired;
a judging means for judging whether or not the structural data exist in correspondence with the region specified by the region specifying information on the basis of the administration data, which are contained in the map file thus specified; and
a display control means which produces, when it is judged that the structural data corresponding to the region exist, the map image data corresponding to the region on the basis of the structural data and outputs the map image data to the display means.

11. An information recording medium which has the map depiction program according to Claim 10 recorded onto it, so as to be read out by the computer.
